# FASCICULE DE BREVET EUROPEEN

(11) **EP 3 502 434 B1**
(45) Date de publication et mention de la délivrance du brevet: **14.10.2020**
(21) Numéro de dépôt: 18205855.2
(22) Date de dépôt: 13.11.2018
(51) Int. Cl.: F02B 29/04, F28F 17/00, F16K 15/14, F16K 17/30, F16K 21/04

(54) **DISPOSITIF D'ÉVACUATION DE CONDENSATS DANS UN CIRCUIT DE SURALIMENTATION D'UN MOTEUR À COMBUSTION**
VORRICHTUNG ZUR ENTFERNUNG VON KONDENSAT IN EINEM LADELUFTSYSTEM EINES VERBRENNUNGSMOTORS
DEVICE FOR EVACUATING CONDENSATES IN A SUPERCHARGING CIRCUIT OF A COMBUSTION ENGINE

(30) Priorité: 22.12.2017 FR 1763020
(43) Date de publication de la demande: 26.06.2019
(73) Titulaire: RENAULT s.a.s., 92100 Boulogne-Billancourt (FR)
(72) Inventeur: MASSET, Ludovic, 27120 MENILLES (FR); MARIDORT, JEROME, 78370 PLAISIR (FR); MARTIN, WILLIAMS, 78000 VERSAILLES (FR); RENAULT, YANN, 78220 VIROFLAY (FR)

(56) Documents cités:
- EP-A1- 2 960 088
- CN-U- 201 953 526
- JP-A- 2014 084 805
- US-A- 2 946 342
- US-A1- 2005 284 521
- US-A1- 2015 167 539
- US-B1- 6 516 829

## Description

La présente invention se rapporte à des moyens de traitement des condensats formés dans un circuit de suralimentation d'un moteur à combustion interne, notamment d'un moteur de véhicule automobile.

Un moteur à combustion, notamment de véhicule automobile, est alimenté en un comburant mélangé au carburant pour être brûlé dans les chambres de combustion des cylindres. Le comburant comprend de l'air, prélevé dans l'atmosphère ambiante, qui est le plus souvent admis dans les chambres sous forme comprimée pour améliorer les performances du moteur. Cet air d'alimentation comprimé est plus particulièrement dénommé air de suralimentation et le moteur est dit suralimenté.

L'air comprimé étant échauffé lors de la compression, il est refroidi pour être densifié avant son admission dans les chambres de combustion en le faisant passer dans un dispositif de refroidissement comprenant un échangeur thermique, ce dispositif étant communément appelé refroidisseur d'air de suralimentation ou désigné par son acronyme « RAS ».

L'échangeur thermique du refroidisseur est disposé dans le circuit de suralimentation en aval du compresseur de l'air d'alimentation du moteur, entre une boite d'arrivée de l'air comprimé dite « boîte chaude » et une boite de sortie de l'air comprimé refroidi dite « boite froide ». L'échangeur thermique comprend un réseau de faisceaux dans lesquels circule l'air une fois comprimé, avant d'être canalisé via la boîte froide vers la conduite d'admission. Lesdits faisceaux sont refroidis notamment par de l'air provenant de l'atmosphère ambiante guidé depuis généralement la face avant du véhicule vers le refroidisseur pour circuler entre lesdits faisceaux.

Dans des conditions climatiques froides et plus particulièrement humides, la vapeur d'eau contenue dans l'air de suralimentation du moteur, se condense en givrant sur les parois du refroidisseur lorsqu'il le traverse, notamment sur les parois internes des faisceaux. Ce phénomène se produit notamment lorsque le véhicule effectue un long trajet.

Après un arrêt du moteur, l'eau gelée sur les parois internes du refroidisseur d'air de suralimentation se liquéfie lorsque la température ambiante augmente et va alors stagner dans un point bas du circuit de suralimentation.

La présence de ces condensats d'eau pose des problèmes dans le fonctionnement du moteur. En particulier, au démarrage du moteur, cette eau stagnante est mise en mouvement par l'aspiration du moteur actionné par le démarreur électrique et arrive dans les cylindres et peut venir bloquer le moteur lors de la phase de compression de l'air d'alimentation lors de la remontée du piston soupapes d'admission et d'échappement fermées. Le démarreur est ainsi mis en court-circuit, son fusible de protection fond et le véhicule est alors en panne.

Dans l'art antérieur des solutions avec des conduites de dérivation des condensats ont pu être proposées mais restent complexes et créent un surcoût important. Une solution d'évacuation des condensats a été décrite par exemple dans la demande de brevet US2015/0167539 grâce à un dispositif comprenant une valve conçue pour évacuer régulièrement les condensats par action d'ouverture ou de fermeture. Cette valve est relativement complexe et doit être installée dans une chambre de collecte des condensats.

L'invention vise à proposer des moyens simples et efficaces de traitement des condensats formés dans un circuit de suralimentation d'un moteur lors du refroidissement du gaz de suralimentation, tout en maintenant de bonnes performances du moteur.

A cet effet l'invention fournit un refroidisseur du gaz de suralimentation d'un moteur à combustion équipé d'un dispositif d'évacuation de condensats par gravité tel que décrit ci-après.

L'invention vise plus particulièrement un refroidisseur dont le gaz de refroidissement est l'air. Ainsi elle fournit un système refroidisseur comprenant un refroidisseur de l'air de suralimentation d'un moteur à combustion comportant un échangeur thermique air/air disposé entre une boîte d'entrée et une boîte de sortie de l'air de suralimentation du moteur, et un dispositif d'évacuation de condensats par gravité équipant au moins l'une desdites boîtes et apte à passer réversiblement d'une position ouverte à une position fermée. Selon l'invention ledit dispositif d'évacuation des condensats comprend un clapet de drainage réalisé en un matériau souple, de préférence en un matériau élastomère, inséré à travers un orifice de réception percé dans un plan moyen horizontal d'une paroi de la boîte de sortie, au point bas de ladite boîte. Ledit clapet est associé à des moyens de régulation de son ouverture et de sa fermeture par calibrage de la force de fermeture fonction de la pression interne dans ladite boite. Ledit clapet comprend une partie supérieure présente avec lesdits moyens de régulation uniquement à l'intérieur de ladite boîte équipée, et une partie inférieure présente uniquement à l'extérieur de ladite boite, lesdites parties supérieure et inférieure du clapet étant reliées par une partie centrale. Cette partie centrale loge des lumières de drainage des condensats en communication avec un canal d'évacuation dont la sortie débouche à travers ladite partie inférieure du clapet vers l'extérieur dudit clapet. En outre ladite partie centrale du clapet est d'une dimension transversale sensiblement inférieure à celle de l'orifice de réception de sorte que le clapet puisse coulisser longitudinalement suivant cette partie centrale dans l'orifice de réception sous l'action des moyens de régulation de son ouverture et de sa fermeture. Ledit clapet est donc configuré pour limiter sa course dans l'orifice à la longueur de la partie centrale du clapet.

Selon l'invention, lesdits moyens de régulation de l'ouverture et de la fermeture du clapet se présentent sous forme d'un ressort hélicoïdal conique enroulé autour de la partie centrale du clapet, sa base étant d'un diamètre supérieur au diamètre de l'orifice de réception du clapet pour être apte à venir en appui sur la surface interne de la paroi de la boite entourant ledit orifice, sous l'effet d'une pression interne dans ladite boite équipée, pression calibrée par ledit ressort pour mettre ledit clapet en position fermée, ladite partie supérieure du clapet étant en outre apte à être repoussée par le ressort qui se détend lorsque la pression interne dans la boîte est inférieure à cette pression calibrée par le ressort pour mettre le clapet en position ouverte.

Selon un mode de réalisation préféré de l'invention, ladite partie supérieure du clapet présente une lèvre d'étanchéité apte à venir en appui sur la paroi interne de ladite boîte équipée sous l'effet d'une pression dans ladite boite calibrée par lesdits moyens de régulation mettant le clapet en position fermée, et de préférence ladite lèvre d'étanchéité est formée par une courbure concave présente sur le pourtour de ladite partie supérieure du clapet, ladite partie supérieure du clapet étant en outre telle que la dimension transversale de son pourtour soit suffisante pour que cette partie ne passe pas à travers l'orifice de réception du clapet.

Avantageusement selon l'invention, la partie inférieure dudit clapet présente une forme conique, la partie la plus large étant dirigée vers la partie centrale du clapet et d'un diamètre suffisant pour que cette partie inférieure du clapet ne passe pas à travers l'orifice de réception lorsque le clapet s'ouvre sous l'action du ressort qui se détend quand la pression dans la boite équipée du dispositif d'évacuation est faible, inférieure au seuil d'effort de calibrage du ressort.

Avantageusement selon l'invention, ladite partie supérieure du clapet présente une lèvre d'étanchéité apte à venir en appui sur la paroi interne de ladite boîte, autour de l'orifice de réception, sous l'effet d'une pression dans ladite boite calibrée par lesdits moyens de régulation mettant le clapet en position fermée. De préférence ladite lèvre d'étanchéité est formée par une courbure concave présente sur le pourtour de ladite partie supérieure du clapet, ladite partie supérieure étant en outre telle que la dimension de son pourtour soit suffisante pour que cette partie ne passe pas à travers l'orifice de réception du clapet.

Avantageusement, le dispositif d'évacuation selon l'invention comporte en outre un tuyau d'évacuation en communication avec l'extérieur, disposé dans le prolongement dudit clapet de drainage. En particulier le canal d'évacuation du clapet de drainage débouche dans ledit tuyau. De préférence ce tuyau se termine par un clapet d'évacuation anti-retour en communication avec l'extérieur. Un tel clapet anti-retour est de préférence de type goutte-à-goutte.

En particulier et avantageusement selon l'invention, le tuyau d'évacuation qui prolonge le clapet de drainage est fixé sous la face inférieure de la paroi percée de l'orifice, de sorte que la partie inférieure du clapet de drainage se trouve à l'intérieur de ce tuyau.

Avantageusement selon l'invention, l'échangeur thermique air/air comporte un réseau de faisceaux verticaux dans lesquels circule l'air de suralimentation.

Selon l'invention, lesdits moyens de régulation de l'ouverture et de la fermeture du clapet se présentent sous forme d'un ressort hélicoïdal conique enroulé autour de la partie centrale du clapet, sa base étant d'un diamètre supérieur au diamètre de l'orifice de réception du clapet pour être apte à venir en appui sur la surface interne de la paroi de la boite entourant ledit orifice, sous l'effet d'une pression interne dans ladite boite équipée, pression calibrée par ledit ressort pour mettre ledit clapet en position fermée, ladite partie supérieure du clapet étant en outre apte à être repoussée par le ressort qui se détend lorsque la pression interne dans la boîte est inférieure à cette pression calibrée par le ressort pour mettre le clapet en position ouverte, la course du clapet dans l'orifice étant limitée à la longueur de la partie centrale du clapet.

L'invention a aussi pour objet un véhicule automobile à moteur suralimenté comprenant un refroidisseur du gaz de suralimentation du moteur avec évacuation des condensats par gravité décrit précédemment.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la figure 1 schématise partiellement un circuit de suralimentation d'un moteur équipé d'un refroidisseur d'air de suralimentation comportant un dispositif d'évacuation de condensats selon l'invention;
- la figure 2A représente schématiquement en coupe longitudinale le dispositif d'évacuation de condensats de la figure 1, la figure 2B illustrant le clapet du dispositif d'évacuation selon une vue en perspective;
- les figures 3A et 3B illustrent en coupe longitudinale, le dispositif d'évacuation de la figure 2 respectivement en position fermée et en position ouverte;
- la figure 4 représente schématiquement en coupe longitudinale une variante du dispositif d'évacuation de condensats selon l'invention.

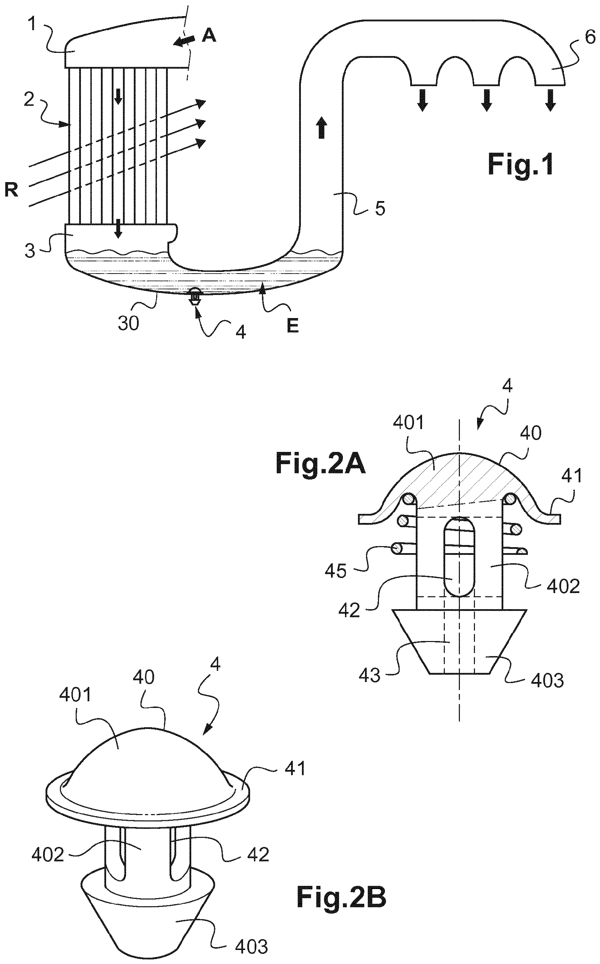

La figure 1 schématise partiellement un circuit de suralimentation d'un moteur à combustion interne comportant un refroidisseur d'air de suralimentation équipé d'un dispositif d'évacuation de condensats selon l'invention. Les éléments ne sont pas représentés à la même échelle afin de donner plus d'importance à la zone avec les condensats et le dispositif d'évacuation des condensats.

Le système refroidisseur d'air de suralimentation (ou RAS), comprend un échangeur thermique air/air 2 relié en amont à une boîte d'entrée 1 de l'air de suralimentation qui a été comprimé par un compresseur non représenté sur la figure, et relié en aval à une boîte de sortie 3. L'air comprimé arrive échauffé dans la boite d'entrée 1 dite « boite chaude » pour être canalisé et refroidi dans le réseau de faisceaux de l'échangeur de chaleur 2 et sortir refroidi dans la boite de sortie 3 dite « boite froide » qui est prolongée par une conduite dite conduite de suralimentation 5 acheminant l'air de suralimentation jusqu'au collecteur d'admission 6 pour atteindre les chambres de combustion des cylindres en mélange avec le carburant. La zone de la boîte froide où est situé le dispositif d'évacuation des condensats peut être une simple conduite. Le circuit de l'air de suralimentation A est symbolisé par des flèches pleines sur la figure 1. L'air froid R de refroidissement qui passe autour des faisceaux de l'échangeur de chaleur du RAS, symbolisé par des flèches partiellement en pointillés sur la figure 1, provient de l'air ambiant, guidé généralement depuis l'avant du véhicule vers le RAS.

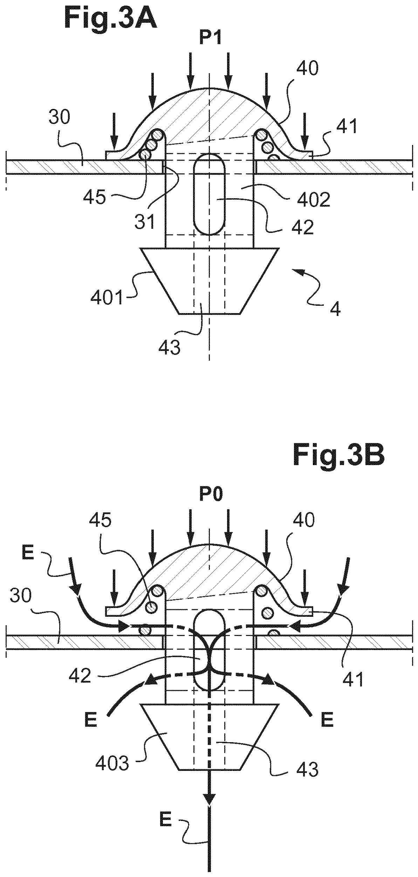

Selon l'invention, le système comprend un dispositif d'évacuation des condensats du refroidisseur qui peuvent se former suite au dégel de l'eau présente dans l'air d'alimentation, notamment lors de conditions climatiques froides et humides comme expliqué en introduction de la description. Ce dispositif d'évacuation 4 des condensats E symbolisés sur la figure 1, comprend un clapet de drainage 40 inséré à force transversalement dans un orifice de réception 31 aménagé au point bas du circuit de refroidissement, en aval de l'échangeur 2, généralement dans la paroi inférieure et dans une zone horizontale de la boite froide 3 afin de favoriser l'évacuation par gravité des condensats. Ledit clapet 40 est associé à un ressort de calibrage 45 qui permet de réguler l'ouverture et la fermeture du clapet fonction de la pression interne dans la boite 3 comme le montrent par exemple les figures 3A ou 3B.

Le clapet 4 illustré est réalisé en un matériau souple, par exemple en élastomère de silicone. Il est formé d'une seule pièce, par exemple par moulage. Un tel clapet présente ainsi l'avantage de pouvoir être déformé réversiblement pour être inséré à force dans l'orifice. Par ailleurs il présente une bonne adaptabilité dans un circuit à pression variable.

La figure 2A illustre le dispositif d'évacuation 4 isolé, formé du clapet 40 avec son ressort 45, la figure 2B montrant le clapet seul dans son volume. Le clapet selon cet exemple préféré a sensiblement une forme de champignon.

Le clapet 40 comprend une partie supérieure 401 et une partie inférieure 403 reliée par une partie centrale 402. La partie supérieure 401 a une forme sensiblement de dôme dont le pourtour comprend une courbure concave (dirigée vers la partie centrale 402) qui formera une lèvre d'étanchéité 41 comme expliqué plus loin. Le diamètre de ce pourtour, qui est la plus grande dimension transversale de la partie supérieure, est supérieur à celui de l'orifice de réception du dispositif d'évacuation afin que cette partie supérieure puisse être maintenue uniquement à l'intérieur de la boite froide du circuit de suralimentation et puisse obstruer efficacement l'orifice dans les conditions expliquées plus loin. La partie inférieure 403 est de forme tronconique, la base la plus large étant située vers la partie centrale 402 et d'un diamètre (sa plus grande dimension transversale) supérieur au diamètre de l'orifice de réception afin que cette partie inférieure reste en permanence à l'extérieur de la boite froide et puisse au besoin obstruer l'orifice de réception. A l'intérieur de cette partie inférieure 403 est creusé, le canal d'évacuation 43, débouchant vers l'extérieur pour évacuer par gravité les condensats. La partie centrale 402 est globalement de forme cylindrique et comprend une pluralité de lumières de drainage 42, leur ouverture étant allongée suivant l'axe central longitudinal du clapet pour faciliter le drainage des condensats, qui débouchent dans le canal d'évacuation 43 situé selon cet exemple préféré dans l'axe central longitudinal du clapet. Le diamètre de cette partie centrale du clapet est légèrement inférieur au diamètre de l'orifice de réception, afin de pouvoir coulisser longitudinalement dans cet orifice en fonction de la position ouverte ou fermée du dispositif d'évacuation comme expliqué plus loin.

Le ressort de calibrage 45 est un ressort hélicoïdal, de forme adaptée à la forme de la face inférieure de la partie supérieure 401 du clapet, préférentiellement de forme tronconique, et d'un diamètre apte à être inséré autour de la partie centrale 402 du clapet. La base du cône dessiné par les spirales du ressort est suffisamment large pour venir en appui sur la paroi interne de la boite froide, autour de l'orifice de réception du dispositif d'évacuation. Ce ressort est rendu escamotable sous la partie supérieure du clapet d'où il ne peut s'échapper, il peut se réduire à l'épaisseur d'une spirale quand il est comprimé.

Les figures 3A et 3B illustrent schématiquement le fonctionnement du dispositif d'évacuation des condensats dans le circuit de suralimentation du moteur.

La figure 3A illustre le dispositif d'évacuation en position fermée dans le circuit de suralimentation du moteur. Lorsque le moteur fonctionne à un régime suffisamment élevé, le circuit de suralimentation est alimenté en air comprimé et il règne une pression P1 relativement importante dans la boite de sortie 3 (boite froide) de sorte que la pression qui s'exerce sur le clapet vient plaquer la partie supérieure du clapet 401 sur la paroi de la boite entourant l'orifice de réception, le ressort 45 ayant été calibré pour se comprimer sous cette pression. Le pourtour du dôme du clapet vient jouer son rôle de lèvre d'étanchéité en fermeture du dispositif d'évacuation, en assurant un bon niveau de pression de contact sur la surface linéique de la paroi de la boîte. Ceci évite notamment qu'une perte de charge se produise dans le circuit de suralimentation quand le moteur est actif.

La figure 3B illustre le dispositif d'évacuation en position ouverte dans le circuit de suralimentation du moteur. Lorsque le moteur fonctionne à un très bas régime voire est arrêté, la pression interne dans la boite équipée du dispositif d'évacuation baisse, passant à une pression P0 inférieure à P1, l'alimentation en air comprimé étant stoppée ou très faible, le ressort 45 alors se détend et pousse la partie supérieure du clapet 401 vers l'intérieur de la boite froide, le clapet étant retenu dans son orifice de réception en sa partie inférieure 403 qui peut jusqu'à aller se plaquer de l'autre côté à l'extérieur de la boite 30. La partie centrale du clapet 402 coulisse au moins partiellement dans l'orifice de réception en remontant vers l'intérieur de la boîte froide et les lumières de drainage 42 en partie centrale sont alors accessibles aux condensats E qui résultent du dégel de l'eau condensée dans le RAS. Ces condensats sont alors drainés par gravité dans le canal d'évacuation 43 jusqu'à l'extérieur du clapet et le cas échéant s'écoulent également directement à travers les lumières de drainage 42 vers l'extérieur si la partie centrale 402 n'est pas totalement remontée dans la boite froide 3 comme illustré par les flèches E sur la figure 3B.

La course du clapet de drainage est donc limitée dans l'orifice par la longueur de sa partie centrale.

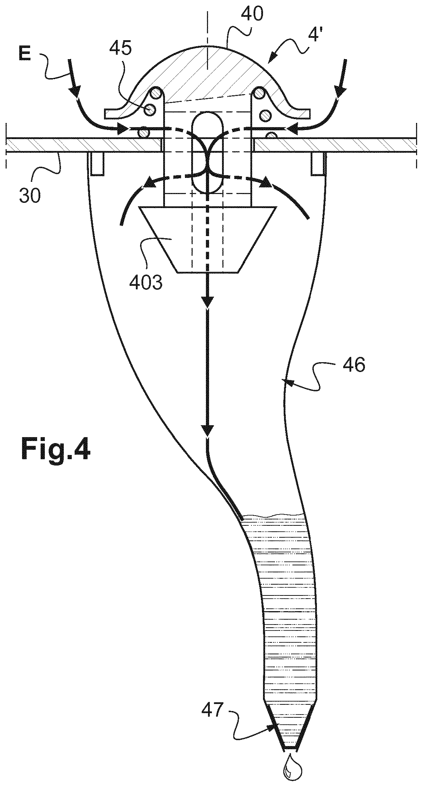

La figure 4 représente schématiquement en coupe longitudinale une variante d'un dispositif d'évacuation de condensats 4' selon l'invention dans lequel le clapet 40 avec son ressort inséré dans la boite froide 3, illustré aux figures précédentes, est complété en sa partie inférieure par un tuyau d'évacuation des condensats 46 pouvant permettre ainsi d'évacuer les condensats plus facilement hors du véhicule, et aussi de mieux prévenir l'aspiration de poussières depuis l'extérieur ou la réaspiration des condensats, ledit tuyau se terminant par un autre clapet 47 de type anti-retour permettant une évacuation goutte à goutte des condensats E . Ce clapet anti-retour 47 a de préférence une forme tronconique inversée percée d'un conduit d'évacuation, de préférence aussi de forme tronconique inversée, par lequel les condensats s'écoulent par gravité vers l'atmosphère extérieure. Ce tuyau est fixé en sa partie supérieure sur la face externe de la paroi de la boite froide 3 de manière à ce que la partie inférieure 403 du clapet de drainage 40 débouche dans ledit tuyau, de préférence se trouve totalement à l'intérieur dudit tuyau.

Le dispositif d'évacuation selon l'invention est bien adapté au refroidisseur à échangeur de chaleur à faisceaux verticaux. Il est utilisé de préférence dans les circuits de suralimentation à air sans adjonction de gaz de combustion recirculés afin de préserver l'environnement de polluants qui pourraient être apportés par ces gaz et évacués avec les condensats d'eau.

On entend dans la description par « cônique » qui a la forme d'un cône ou d'un tronçon de cône.

L'invention a atteint ses objectifs en fournissant un dispositif d'évacuation des condensats simple dans sa conception et sa mise en œuvre tout en assurant une évacuation régulée des condensats sans nuire aux performances du moteur. L'invention s'applique aussi bien à un moteur à essence qu'à un moteur diesel.

## Revendications

1. Système refroidisseur comprenant un refroidisseur du gaz de suralimentation d'un moteur à combustion, dans lequel le gaz de suralimentation du moteur à combustion est l'air, ledit refroidisseur comportant un échangeur thermique air/air disposé entre une boîte d'entrée et une boîte de sortie de l'air de suralimentation du moteur, et un dispositif d'évacuation de condensats par gravité équipant au moins l'une desdites boîtes, et apte à passer réversiblement d'une position ouverte à une position fermée, **caractérisé en ce que** ledit dispositif d'évacuation des condensats (4) comprend un clapet de drainage (40),
ledit clapet étant inséré à travers un orifice de réception (31) percé dans un plan moyen horizontal d'une paroi (30) de la boîte de sortie (3), au point bas de ladite boîte, ledit clapet étant associé à des moyens de régulation de son ouverture et de sa fermeture (45) par calibrage fonction de la pression interne dans ladite boite, ledit clapet comprenant une partie supérieure (401) présente avec lesdits moyens de régulation (45) uniquement à l'intérieur de ladite boîte équipée, et une partie inférieure (403) présente uniquement à l'extérieur de ladite boite, lesdites parties supérieure et inférieure du clapet étant reliées par une partie centrale (402),
ladite partie centrale étant d'une dimension transversale sensiblement inférieure à celle de l'orifice de réception de sorte que le clapet puisse coulisser longitudinalement le long de cette partie centrale dans l'orifice de réception sous l'action des moyens de régulation de son ouverture et de sa fermeture,
**caractérisé en ce que**
le clapet de drainage (40) est réalisé en un matériau souple, de préférence en un matériau élastomère,
la partie centrale (402) loge des lumières de drainage des condensats (42) en communication avec un canal d'évacuation (43) dont la sortie débouche à travers ladite partie inférieure du clapet vers l'extérieur dudit clapet,
lesdites lumières de drainage (42) ayant une forme allongée suivant l'axe longitudinal dudit clapet, et lesdits moyens de régulation de l'ouverture et de la fermeture du clapet se présentant sous forme d'un ressort hélicoïdal (45) conique enroulé autour de la partie centrale du clapet, sa base étant d'un diamètre supérieur au diamètre de l'orifice de réception du clapet pour être apte à venir en appui sur la surface interne de la paroi de la boite entourant ledit orifice, sous l'effet d'une pression interne dans ladite boite équipée, pression calibrée par ledit ressort pour mettre ledit clapet en position fermée, ladite partie supérieure du clapet étant en outre apte à être repoussée par le ressort qui se détend lorsque la pression interne dans la boîte est inférieure à cette pression calibrée par le ressort pour mettre le clapet en position ouverte, la course du clapet dans l'orifice étant limitée à la longueur de la partie centrale du clapet.

2. Système refroidisseur selon la revendication 1 **caractérisé en ce que** ledit canal d'évacuation (43) est aménagé en partie inférieure (403) du clapet dans l'axe central longitudinal dudit clapet et que les lumières de drainage (42) sont aménagées de manière à être débouchantes dans ledit axe.

3. système refroidisseur selon l'une des revendications 1 à 2, **caractérisé en ce que** ladite partie supérieure (401) du clapet présente une lèvre d'étanchéité (41) apte à venir en appui sur la paroi interne de ladite boîte équipée sous l'effet d'une pression dans ladite boite calibrée par lesdits moyens de régulation mettant le clapet en position fermée, et de préférence ladite lèvre d'étanchéité étant formée par une courbure concave présente sur le pourtour de ladite partie supérieure du clapet, ladite partie supérieure étant en outre telle que la dimension de son pourtour soit suffisante pour que cette partie ne passe pas à travers l'orifice de réception du clapet.

4. Système refroidisseur selon l'une des revendications 1 à 3, **caractérisé en ce que** la partie inférieure dudit clapet (403) présente une forme conique, la partie la plus large étant dirigée vers la partie centrale du clapet et d'un diamètre suffisant pour que cette partie inférieure du clapet ne passe pas à travers l'orifice de réception.

5. Système refroidisseur selon l'une des revendications 1 à 4, **caractérisé en ce que** ledit clapet en matériau souple est formé d'une seule pièce.

6. Système refroidisseur selon l'une des revendications 1 à 5, **caractérisé en ce que** ledit dispositif d'évacuation comporte en outre un tuyau d'évacuation (46) dans lequel débouche le canal de drainage (43) du clapet de drainage (40), et se terminant par un clapet anti-retour (47), et de préférence ledit tuyau étant fixé sous la face inférieure de la paroi de la boite en englobant la partie inférieure (403) du clapet de drainage.

7. Système refroidisseur selon l'une des revendications 1 à 6, **caractérisé en ce que** l'échangeur thermique comporte un réseau de faisceaux verticaux dans lesquels circule l'air de suralimentation.

8. Véhicule automobile à moteur suralimenté comprenant un système refroidisseur selon l'une des revendications 1 à 7.

## Patentansprüche

1. Kühlsystem, welches einen Kühler des Ladegases eines Verbrennungsmotors umfasst, wobei das Ladegas des Verbrennungsmotors Luft ist, wobei der Kühler einen Luft/Luft-Wärmetauscher, der zwischen einem Eintrittsgehäuse und einem Austrittsgehäuse der Ladeluft des Motors angeordnet ist, und eine Vorrichtung zum Ableiten von Kondensat durch Schwerkraft, mit der wenigstens eines der Gehäuse ausgestattet ist und die in der Lage ist, reversibel von einer offenen Position zu einer geschlossenen Position überzugehen, aufweist, **dadurch gekennzeichnet, dass** die Vorrichtung zum Ableiten von Kondensat (4) ein Ablassventil (40) umfasst, wobei dieses Ventil durch eine Aufnahmeöffnung (31) hindurch, die in einer horizontalen Mittelebene einer Wand (30) des Austrittsgehäuses (3) gebohrt ist, am tiefsten Punkt des Gehäuses eingesetzt ist, wobei das Ventil mit Mitteln zur Regelung seines Öffnens und seines Schließens (45) durch Kalibrierung in Abhängigkeit vom Innendruck in dem Gehäuse verbunden ist, wobei das Ventil einen oberen Teil (401), der sich mit den Regelungsmitteln (45) ausschließlich im Inneren des mit ihm ausgestatteten Gehäuses befindet, und einen unteren Teil (403), der sich ausschließlich außerhalb des Gehäuses befindet, umfasst, wobei der obere und der untere Teil des Ventils durch einen mittleren Teil (402) verbunden sind,
wobei der mittlere Teil eine Querabmessung aufweist, die im Wesentlichen kleiner als diejenige der Aufnahmeöffnung ist, so dass das Ventil unter der Wirkung der Mittel zur Regelung seines Öffnens und seines Schließens in Längsrichtung entlang dieses mittleren Teils in der Aufnahmeöffnung gleiten kann,
**dadurch gekennzeichnet, dass**
das Ablassventil (40) aus einem flexiblen Material hergestellt ist, vorzugsweise aus einem Elastomermaterial,
der mittlere Teil (402) Schlitze zum Ablassen des Kondensats (42) aufweist, die mit einem Ableitungskanal (43) in Verbindung stehen, dessen Ausgang durch den unteren Teil des Ventils hindurch auf der Außenseite des Ventils mündet,
wobei die Ablassschlitze (42) eine entlang der Längsachse des Ventils lang gestreckte Form aufweisen und die Mittel zur Regelung des Öffnens und des Schließens des Ventils in Form einer konischen Schraubenfeder (45) vorliegen, die um den mittleren Teil des Ventils gewickelt ist, wobei ihre Grundfläche einen Durchmesser aufweist, der größer als der Durchmesser der Aufnahmeöffnung für das Ventils ist, damit sie unter der Wirkung eines Innendrucks in dem mit dem Ventil ausgestatteten Gehäuse, wobei dieser Druck durch die Feder kalibriert ist, an der Innenfläche der die Öffnung umgebenden Wand des Gehäuses zur Anlage kommen kann, um das Ventil in die geschlossene Position zu bringen, wobei der obere Teil des Ventils außerdem durch die Feder, welche sich entspannt, wenn der Innendruck in dem Gehäuse niedriger als dieser durch die Feder kalibrierte Druck ist, zurückdrückbar ist, um das Ventil in die geöffnete Position zu bringen, wobei der Weg des Ventils in der Öffnung auf die Länge des mittleren Teils des Ventils begrenzt ist.

2. Kühlsystem nach Anspruch 1, **dadurch gekennzeichnet, dass** der Ableitungskanal (43) im unteren Teil (403) des Ventils in der Mittellängsachse des Ventils angeordnet ist und die Ablassschlitze (42) so angeordnet sind, dass sie in diese Achse münden.

3. Kühlsystem nach einem der Ansprüche 1 bis 2, **dadurch gekennzeichnet, dass** der obere Teil (401) des Ventils eine Dichtlippe (41) aufweist, die geeignet ist, auf der Innenwand des mit ihm ausgestatteten Gehäuses unter der Wirkung eines durch die Regelungsmittel kalibrierten Drucks in dem Gehäuse zur Anlage zu kommen, wodurch das Ventil in die geschlossene Position gebracht wird, und wobei vorzugsweise die Dichtlippe durch eine konkave Krümmung gebildet wird, die auf dem Umfang des oberen Teils des Ventils vorhanden ist, wobei der obere Teil außerdem so beschaffen ist, dass die Abmessung seines Umfangs ausreichend dafür ist, dass dieser Teil nicht durch die Aufnahmeöffnung für das Ventil hindurchpasst.

4. Kühlsystem nach einem der Ansprüche 1 bis 3, **dadurch gekennzeichnet, dass** der untere Teil des Ventils (403) eine konische Form aufweist, wobei der breiteste Teil dem mittleren Teil des Ventils zugewandt ist und einen Durchmesser hat, der ausreichend dafür ist, dass dieser untere Teil des Ventils nicht durch die Aufnahmeöffnung hindurchpasst.

5. Kühlsystem nach einem der Ansprüche 1 bis 4, **dadurch gekennzeichnet, dass** das Ventil aus flexiblem Material aus einem Stück geformt ist.

6. Kühlsystem nach einem der Ansprüche 1 bis 5, **dadurch gekennzeichnet, dass** die Vorrichtung zur Ableitung außerdem ein Ableitungsrohr (46) aufweist, in welches der Ablasskanal (43) des Ablassventils (40) mündet, und das in einem Rückschlagventil (47) endet, und wobei vorzugsweise das Rohr unter der Unterseite der Wand des Gehäuses befestigt ist und dabei den unteren Teil (403) des Ablassventils umschließt.

7. Kühlsystem nach einem der Ansprüche 1 bis 6, **dadurch gekennzeichnet, dass** der Wärmetauscher ein Netz von vertikalen Rohrbündeln aufweist, in denen die Ladeluft zirkuliert.

8. Kraftfahrzeug mit Auflademotor, welches ein Kühlsystem nach einem der Ansprüche 1 bis 7 umfasst.

## Claims

1. Cooling system comprising a cooler for cooling the forced induction gas of a combustion engine, wherein the forced induction gas of the combustion engine is air, said cooler having an air/air heat exchanger disposed between an inlet tank and an outlet tank for the forced induction air of the engine, and a device for evacuating condensates by gravity that is fitted to at least one of said tanks and is able to pass reversibly from an open position to a closed position, **characterized in that** said condensate evacuation device (4) comprises a drainage valve (40),
said valve being inserted through a receiving orifice (31) made in a horizontal median plane of a wall (30) of the outlet tank (3), at the bottom point of said tank, said valve being associated with means (45) for regulating its opening and closure by calibration depending on the internal pressure in said tank, said valve comprising an upper part (401) that is present with said regulation means (45) only inside said tank that is so equipped, and a lower part (403) that is present only outside said tank, said upper part and lower part of the valve being connected by a central part (402),
said central part having a transverse dimension that is substantially smaller than that of the receiving orifice such that the valve may slide longitudinally along this central part in the receiving orifice under the action of the means for regulating its opening and closure, **characterized in that**
the drainage valve (40) is made from a flexible material, preferably from an elastomer material,
the central part (402) accommodates condensate drainage holes (42) that are in communication with an evacuation channel (43) of which the outlet opens through said lower part of the valve to outside said valve,
said drainage holes (42) having an elongate shape along the longitudinal axis of said valve, and said means for regulating the opening and closure of the valve being in the form of a conical coil spring (45) wound around the central part of the valve, its base having a diameter greater than the diameter of the orifice for receiving the valve so as to be able to come to bear on the internal surface of the wall of the tank surrounding said orifice, under the effect of an internal pressure in said tank that is so equipped, which pressure is calibrated by said spring so as to put said valve in the closed position, said upper part of the valve also being able to be pushed back by the spring that expands when the internal pressure in the tank is lower than this pressure calibrated by the spring so as to put the valve in the open position, the travel of the valve in the orifice being limited to the length of the central part of the valve.

2. Cooling system according to Claim 1, **characterized in that** said evacuation channel (43) is formed in the lower part (403) of the valve in the longitudinal central axis of said valve and that the drainage holes (42) are formed so as to open into said axis.

3. Cooling system according to either of Claims 1 and 2, **characterized in that** said upper part (401) of the valve has a sealing lip (41) that is able to come to bear on the internal wall of said tank that is so equipped under the effect of a pressure in said tank that is calibrated by said regulation means putting the valve in the closed position, and said sealing lip preferably being formed by a concave curvature that is present on the perimeter of said upper part of the valve, said upper part also being such that the size of its perimeter is sufficient for this part not to pass through the orifice for receiving the valve.

4. Cooling system according to one of Claims 1 to 3, **characterized in that** the lower part (403) of said valve has a conical shape, the widest part being directed towards the central part of the valve and having a diameter sufficient for this lower part of the valve not to pass through the receiving orifice.

5. Cooling system according to one of Claims 1 to 4, **characterized in that** said valve made from flexible material is formed in one piece.

6. Cooling system according to one of Claims 1 to 5, **characterized in that** said evacuation device also has an evacuation pipe (46) into which the drainage channel (43) of the drainage valve (40) opens, which is terminated by a non-return valve (47), said pipe preferably being fastened beneath the lower face of the wall of the tank and encompassing the lower part (403) of the drainage valve.

7. Cooling system according to one of Claims 1 to 6, **characterized in that** the heat exchanger has an array of vertical bundles in which the forced induction air circulates.

8. Motor vehicle with a forced induction engine comprising a cooling system according to one of Claims 1 to 7.
